# EUROPÄISCHE PATENTSCHRIFT

(11) **EP 0 655 267 B1**
(45) Veröffentlichungstag und Bekanntmachung des Hinweises auf die Patenterteilung: **28.05.1997**
(21) Anmeldenummer: 94113216.9
(22) Anmeldetag: 24.08.1994
(51) Int. Cl.: B01D 21/00, E03F 5/16

(54) **Abscheider für mit Schwimmstoffen befrachtete Abwässer**
Separator for waste water loaded with floating matter
Séparateur pour eaux usées chargées de matrices flottantes

(30) Priorität: 25.08.1993 DE 9312707 U
(43) Veröffentlichungstag der Anmeldung: 31.05.1995
(73) Patentinhaber: PASSAVANT-WERKE AG, D-65322 Aarbergen 7 (DE)
(72) Erfinder: Baar, Norbert, D-65329 Hohenstein-Holzhausen (DE); Zodet, Otto, D-90489 Nürnberg (DE); Dambmann, Willi, D-66558 Gückingen (DE)

(56) Entgegenhaltungen:
- DE-A- 2 610 773
- DE-C- 511 367
- DE-U- 8 121 718

## Beschreibung

Die Erfindung betrifft einen Abscheider für mit Schwimmstoffen, wie insbesondere Benzin, Öl, Benzol u.dgl., befrachtete Abwässer, die hierfür einen Zulauf, einen unten weggeführten Reinwasserablauf und eine Absaugleitung zum Abzug der durch Strömungsberuhigung aufgrund ihres Dichteunterschieds zu Wasser abgeschiedenen Schwimmstoffe aufweist.

Es ist in der zuständigen Norm vorgeschrieben, die abgetrennten Schwimmstoffe in bestimmten Zeitintervallen zu entsorgen. Die meisten Abscheider besitzen eine Alarmvorrichtung, die die fällig gewordene Entsorgung meldet, wenn die höchstzulässige Schwimmstoffmenge im Abscheider angesammelt ist. Wird die Entsorgung auch dann noch unterlassen und wird der Abscheider weiter betrieben, dann verschließt ein dem Reinwasserablauf vorgeordnetes Schwimmerventil den Ablauf kurze Zeit später. Der auch nach Verschließen des Reinwasserablaufs fortgesetzte Abscheiderbetrieb führt zu einem Aufstau, der zum Auslösen eines weiteren Alarms ausgenutzt werden kann.

Die Entsorgung der abgeschiedenen Schwimmstoffe geschieht in der Regel durch Entsorgungsfahrzeuge, die die Schwimmstoffe mittels eines Saugschlauchs, der durch den Wartungsschacht eingeführt wird, absaugen. Der Schlauch wird von dem Entsorgungspersonal über die Oberfläche der Schwimmstoffschicht bewegt. Dabei kann es auch zu Beschädigungen des ungeschützt positionierten Schwimmerverschlusses kommen, die nach vollständiger Entleerung des Abscheiders und anschließend vorgeschriebener Kontrolle des Schwimmerverschlusses beseitigt werden müssen.

In der Regel wird also der gesamte Inhalt des Abscheiders entsorgt. Das mitabgesaugte Wasser wird ebenfalls zur Sondermüllentsorgung transportiert und muß dort mit großem Aufwand wieder von den Schwimmstoffen getrennt werden. Es wird daher mitunter schon so vorgegangen, daß nur die Schwimmstoffschicht abgesaugt und das Wasser im Abscheider belassen wird. Für diese Art der Entsorgung wurde bereits ein Abscheider vorgeschlagen (DE-A-26 10 773-C), der eine waagerecht liegende Abzugsrinne aufweist, an die eine Saugleitung zum Ankoppeln des Saugschlauchs angeschlossen ist. Die Rinne steht im Abscheidebetrieb über der Spiegelfläche der Schwimmstoffschicht und wird zum Abzug der Schwimmstoffschicht um ihre Längsachse so weit gedreht, daß die Überlaufkante in die Schwimmsstoffschicht eintaucht, sodaß Schwimmstoffe in die Abzugsrinne fließen. Der Mechanismus für die Drehung der Abnzugsrinne ist aufwendig und anfällig. Außerdem ist nicht zu vermeiden, daß je nach Dicke der Schwimmstoffschicht doch Wasser mit abgezogen wird.

Die Aufgabe, eine Vereinfachung des Abzugs der Schwimmstoffschicht zu erzielen und das Mitabziehen von Wasser definitiv zu verhindern, wird erfindungsgemäß dadurch gelöst, daß die Absaugleitung mit einer ihre untere Absaugöffnung bis in die Höhe der vorher abgefühlten Trennlinie Schwimmstoffe/Wasser absenkenden Höhenverstelleinrichtung ausgestattet ist, und daß der Absaugöffnung im vertikalen Abstand eine die Absaugung von Wasser verhindernde, etwa horizontal verlaufende Leitplatte vorgeordnet ist. Die trennsichere Absaugung der Schwimmstoffe wird mit einer solchen einstellbaren Absaugleitung erreicht, ohne daß die Gefahr der Beschädigung der Sicherheitseinrichtungen besteht. Beim Absaugen wird vorzugsweise in hoher Stellung der Absaugleitung begonnen und dann die Absaugöffnung mit dem Saugfortschritt tiefer verstellt. Der Zeitpunkt, an dem das Absaugen beendet werden muß, ist durch die untere Begrenzung der Höhenverstelleinrichtung vorgegeben.

Die Absaugleitung erhält oben eine übliche Anschlußkupplung für den Saugschlauch des Entsorgungsfahrzeugs. Bei den heute üblichen Abscheider-Bauarten mit stehend zylindrischer Form und mit mittig angeordnetem Reinwasser-Ablauf ist für die Verlegung der erfindungsgemäß höhenverstellbaren Absaugleitung ausreichend Platz.

Eine gleichwirkende Ausführungsform der Erfindung, die Absaugung auf die Schwimmschicht zu begrenzen, ist dadurch gekennzeichnet, daß die Absaugleitung als an eine von ihrer oberen Halterung aus in der Länge einstellbare flexible Höhenverstelleinrichtung anhängbarer Schlauch ausgebildet ist. Als flexible Höhenverstelleinrichtung kann insbesondere eine Kette eingesetzt werden. Die unterste Stellung der Absaugöffnung ist dann durch die veränderliche Länge der Kette bestimmt, die den Absenkweg begrenzt. Vor Einstellen der Kettenlänge kann durch einen entsprechend tarierten Schwimmer die Trennlinie Schwimmstoffe/Wasser abgefühlt werden.

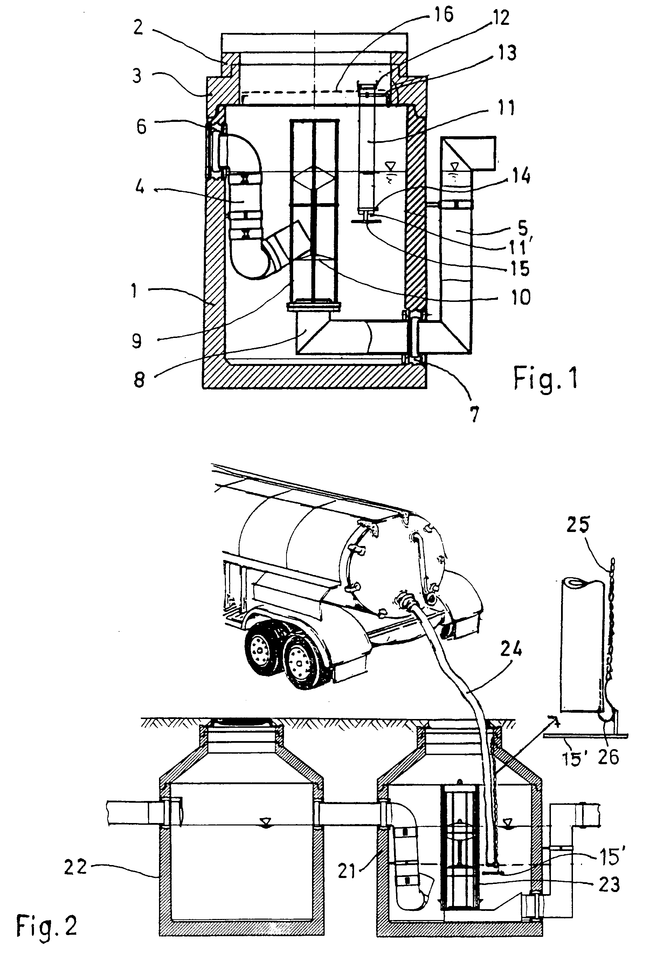

Die Abbildungen zeigen die beiden soeben beschriebenen Ausführungsmöglichkeiten der Erfindung. Fig.1 stellt ein aus Stahlbeton monolithisch, d.h. in einem Stück, hergestelltes Abscheidegefäß 1 dar, das mit einer von Schachtringen 2 getragenen Schachtabdeckung 3 abgedeckt ist. Die Schachtringe bilden den Wartungsschacht, durch den die Schwimmstoffe entsorgt werden. Zu- und Ablaufrohre 4, 5 sind Rohrkrümmer, die in Mauerflansche 6, 7 dichtend eingesetzt sind. Dem Reinwasser-Ablauf 8 ist ein in einem Käfig 9 geführter Schwimmerverschluß 10 vorgeordnet.

Die in der Höhe einstellbare Absaugleitung 11 für die Schwimmstoffe mit oberer Schlauchkupplung 12 wird mittels zweier Haltebügel 13, 14 an der Schacht- bzw. Abscheiderwand befestigt. Die Halteösen sind so konstruiert, daß eine begrenzte Höhenverstellung möglich ist. Vor der Absaugöffnung 11' liegt mit Abstand eine Leitplatte 15, die bewirken soll, daß die Schwimmstoffschicht nur von der Seite her abgesaugt wird. Dadurch wird das Mitansaugen von Wasser vermieden. Der freie Querschnitt des Wartungsschachts wird mit einem Gitter 16 abgedeckt, das verhindern soll, daß der Saugschlauch direkt in die Schwimmschicht eingetaucht werden kann.

Dem Abscheider nach Fig.2 ist ein üblicher Schlammfang 22 vorgeschaltet, in dem Sinkstoffe durch Absinken abgetrennt werden. Der Abscheider ist durch Einsetzen eines den Schwimmerkäfig umgebenden Ringfilters 23 zu einem Koaleszenzabscheider modifiziert. Dispergierte Leichtstoffpartikel werden beim Durchströmen des Ringfilters durch Aggregation zum Aufschwimmen gebracht.

Für die Begrenzung des Absenkweges des Saugschlauchs 24 dient eine Kette 25, die mit einer Klammer 26 an der Absaugöffnung des Saugschlauchs angehängt wird (sh. vergrößerte Ausschnittszeichnung). Das obere Ende der Kette ist längeneinstellbar im Wartungsschacht befestigt.

## Patentansprüche

1. Abscheider für mit Schwimmstoffen befrachtete Abwässer mit einem Behälter, einem Zulauf, einem unten weggeführten Reinwasserablauf und einer durch einen oberen Wartungsschacht verlegten Absaugleitung, die eine im Bereich der Schwimmstoffschicht liegende Absaugöffnung für die Schwimmstoffe aufweist, **dadurch gekennzeichnet**, daß die Absaugleitung (11) mit einer ihre untere Absaugöffnung (11') bis in die Höhe der vorher abgefühlten Trennlinie Schwimmstoffe/Wasser absenkenden Höhenverstelleinrichtung (13, 14) ausgestattet ist, und daß der Absaugöffnung (11') im vertikalen Abstand eine die Absaugung von Wasser verhindernde, etwa horizontal verlaufende Leitplatte (15) vorgeordnet ist.

2. Abscheider nach Anspruch 1, **dadurch gekennzeichnet**, daß die Absaugleitung als an eine von ihrer oberen Halterung aus in der Länge einstellbare flexible Höhenverstelleinrichtung (25) anhängbarer Saugschlauch (24) ausgebildet ist.

3. Abscheider nach Anspruch 1 oder 2, **dadurch gekennzeichnet**, daß der freie Querschnitt des Wartungsschachts (2), der nicht von dem Saugschlauch bzw. der höheneinstellbaren Absaugleitung (11) eingenommen wird, von einem Gitter (16) abgedeckt ist, dessen Maschen kleiner als der Durchmesser der Absaugelemente (11, 24) sind.

## Claims

1. Separator for waste water containing suspended solids comprising an inlet pipe, a clear water discharge pipe at the bottom and a suction pipe, mounted through an upper maintenance manhole, with an opening within the range of the scum layer to withdraw the accumulated suspended solids, **characterized in that** the suction pipe (11) is provided with a height adjusting device (13, 14) for its lower suction opening (11') which will be adjusted to the separation line scum/water which was sensored before and that a baffle plate (15) is positioned mostly horizontally at a determined distance in front of the suction opening (11') to prevent that water will be withdrawn also.

2. Separator according to claim 1, **characterized in that** the suction pipe is formed as a suction hose (24) attached to the upper mounting support of the lengthwise adjustable flexible height-adjusting device (25).

3. Separator according to the claim 1 or 2, **characterized in that** the free section of the maintenance manhole (2) which is not taken by the suction hose or height-adjustable suction pipe (11) resp., is covered by a grating (16) whose openings are smaller than the diameter of the suction elements (11, 24).

## Revendications

1. Séparateur pour les eaux usées chargées des matières suspendues muni d'une conduite d'amenée, d'une sortie d'eau clarifiée au fond et d'un tuyau d'aspiration installé à travers d'un regard d'égout supérieur, dont l'orifice d'aspiration pour les flottants est située dans le range de la couche des flottants, **caractérisé en ce que** le tuyau d'aspiration (11) est muni d'un dispositif ajustable en hauteur (13, 14) pour l'orifice d'aspiration inférieure (11') laquelle sera ajustée à l'hauteur de la ligne de séparation flottants/eau déterminée avant et qu'une chicane est arrangée horizontalement (15) à une distance prédéfinie devant l'orifice d'aspiration (11') afin de prévenir l'aspiration de l'eau.

2. Séparateur selon revendication 1, **caractérisé en ce que** le tuyau d'aspiration est formé comme tuyau d'aspiration souple (24) fixé au support suppérieur du dispositf ajustable en hauteur lequel est ajustable également en longueur.

3. Séparateur selon une des revendications 1 où 2, **caractérisé en ce que** la section du regard d'égout (2) laquelle n'est pas prise par le tuyau d'aspiration souple ou le tuyau d'aspiration ajustable en hauteur (11) resp. est couverte par une grille (16) dont les mailles sont plus petites que le diamètre des éléments d'aspiration (11, 24).
